# EUROPEAN PATENT SPECIFICATION

(11) **EP 3 611 446 B1**
(45) Date of publication and mention of the grant of the patent: **11.05.2022**
(21) Application number: 19199837.6
(22) Date of filing: 31.08.2017
(51) Int. Cl.: F25B 49/02, F25B 47/02, F24F 11/43, F24F 11/63, F24F 13/22, F24F 1/00, F24F 11/41, F24F 11/70

(54) **AIR-CONDITIONER**
KLIMAANLAGE
CLIMATISEUR

(30) Priority: 28.04.2017 JP 2017089876
(43) Date of publication of application: 19.02.2020
(62) Divisional of application: 17907743.3
(73) Proprietor: Hitachi-Johnson Controls Air Conditioning, Inc., Tokyo 105-0022 (JP)
(72) Inventor: TANAKA, Yukinori, Tokyo, 105-0022 (JP); AWANO, Masakazu, Tokyo, 105-0022 (JP); UEDA, Yoshiro, Tokyo, 105-0022 (JP); YOSHIDA, Kazumasa, Tokyo, 105-0022 (JP); NOTOYA, Yoshiaki, Tokyo, 105-0022 (JP)
(74) Representative: MERH-IP Matias Erny Reichl Hoffmann Patentanwälte PartG mbB

(56) References cited:
- EP-A1- 2 410 257
- JP-A- 2009 058 143
- JP-A- 2010 014 288
- JP-A- 2013 185 808

## Description

### TECHNICAL FIELD

The present invention relates to an air-conditioner.

### BACKGROUND ART

For example, Patent Document 1 describes, as the technique of bringing an indoor heat exchanger of an air-conditioner into a clean state, an air-conditioner "including a moisture providing section configured to cause water to adhere to the fin surface after heating operation." Note that the above-described moisture providing section performs cooling operation after the heating operation, thereby causing water to adhere to the fin surface of the indoor heat exchanger.

### CITATION LIST

### PATENT DOCUMENT

Patent Document 1:Japanese Patent No. 4931566
Patent Document 2: JP 2010 014288 A
Patent Document 3: EP 2 410 257 A1

### SUMMARY OF THE INVENTION

### PROBLEMS TO BE SOLVED BY THE INVENTION

However, in the technique described in Patent Document 1, even when the normal cooling operation is performed after the heating operation, the amount of water adhering to the indoor heat exchanger might be insufficient for cleaning the indoor heat exchanger.

Patent document 2 discloses an air conditioner including an indoor unit provided with a suction opening for sucking the indoor air and a supply opening for blowing off the sucked air indoors on a body case and provided with an indoor heat exchanger and an indoor air blower in an air distribution passage communicating the suction opening and the supply opening, and an outdoor unit provided with an outdoor air blower, a compressor, an outdoor heat exchanger and an electric expansion valve. The indoor heat exchanger performs a frost forming operation for forming frost on at least a part of a fin, so that the dirt attached to the fin surface of the indoor heat exchanger is removed by defrost water by a defrosting operation thereafter.

Patent document 3 discloses an air conditioning apparatus in which warm air at the start of air-warming can be quickly provided by a simple configuration. The air conditioning apparatus includes at least a compressor, an indoor heat exchanger, an indoor fan, an out-door electric expansion valve, and an outdoor heat exchanger, wherein a pressure sensor perceives a pressure of refrigerant sent from the compressor to the indoor heat exchanger. A control part stops the indoor fan until the compressor goes from being at rest to starting up and the pressure perceived by the pressure sensor reaches target high pressure, and from the time the target high pressure is exceeded, the control part performs control for driving and stopping the indoor fan so that a high-pressure state is maintained.

For this reason, the present invention is intended to provide an air-conditioner configured so that an indoor heat exchanger can be properly cleaned.

### SOLUTIONS TO THE PROBLEMS

For solving the above-described problem, the present invention is defined by the features of claim 1. Specifically it concerns an air-conditioner including a refrigerant circuit comprising a compressor, a condenser, an expansion valve and an evaporator in which refrigerant circulates sequentially in the compressor, the condenser, the expansion valve, and the evaporator, an indoor temperature sensor detecting an indoor temperature and an indoor fan; and a controller configured to control at least the compressor and the expansion valve. One of the condenser and the evaporator is an outdoor heat exchanger, and the other one is an indoor heat exchanger. A temperature sensor configured to detect the temperature of the indoor heat exchanger is provided. An indoor fan is provided. The controller causes the indoor heat exchanger to function as the evaporator, and can end the processing of freezing water on the indoor heat exchanger when a first period set in advance is elapsed after the start of the processing. The controller maintains, after the end of the processing, stop states of the compressor and the indoor fan, and unfreezes the water on the indoor heat exchanger.

### EFFECTS OF THE INVENTION

According to the present invention, the air-conditioner configured so that the indoor heat exchanger can be properly cleaned.

### BRIEF DESCRIPTION OF THE DRAWINGS

Fig. 1 is a front view of an indoor device, an outdoor device, and a remote controller provided at an air-conditioner according to a first embodiment of the present invention.
Fig. 2 is a longitudinal sectional view of the indoor device provided at the air-conditioner according to the first embodiment of the present invention.
Fig. 3 is a diagram for describing a refrigerant circuit of the air-conditioner according to the first embodiment of the present invention.
Fig. 4 is a functional block diagram of the air-conditioner according to the first embodiment of the present invention.
Fig. 5 is a flowchart of cleaning processing executed by a controller of the air-conditioner according to the first embodiment of the present invention.
Fig. 6 is a flowchart of the processing of freezing an indoor heat exchanger.
Fig. 7 is a map of a relationship between a relative humidity of an indoor air and freezing time.
Fig. 8 is a map of a relationship between an outdoor temperature and a compressor rotation speed.
Fig. 9 is a graph for describing one example of a temporal change in the temperature of the indoor heat exchanger.
Fig. 10 is a chart for describing switching of ON/OFF of a compressor and an indoor fan.
Fig. 11 is a flowchart of the processing of unfreezing the indoor heat exchanger.
Fig. 12 is a flowchart of the processing of drying the indoor heat exchanger.
Fig. 13 is a flowchart of the processing of freezing an indoor heat exchanger in an air-conditioner according to a second embodiment not part of the present invention.
Fig. 14 is a diagram for describing a refrigerant circuit of an air-conditioner according to a third embodiment of the present invention.
Fig. 15 is a flowchart of the processing of freezing a second indoor heat exchanger.
Fig. 16 is a flowchart of the processing of freezing an indoor heat exchanger in an air-conditioner according to a fourth embodiment of the present invention.

### DESCRIPTION OF EMBODIMENTS

### «First Embodiment»

### <Configuration of Air-conditioner>

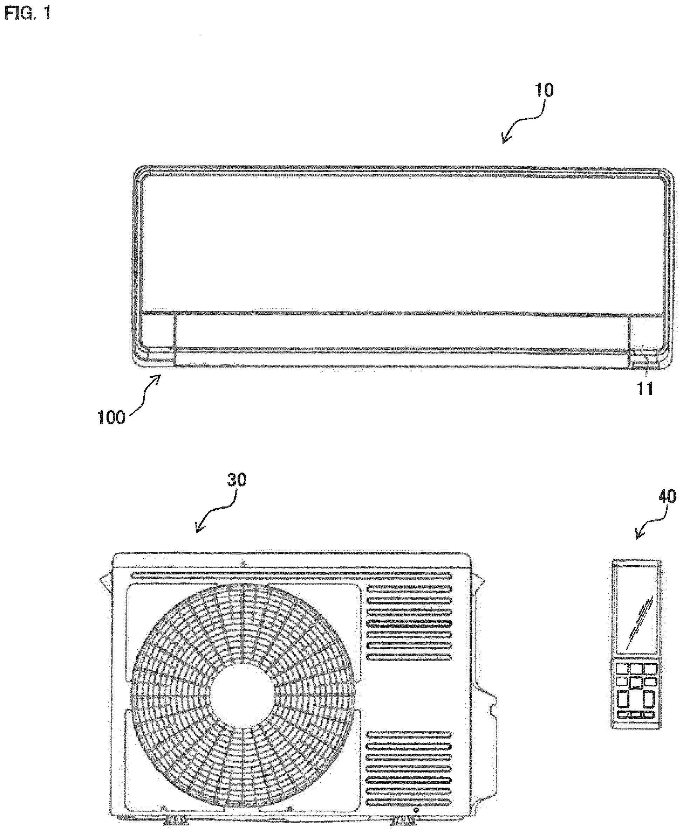

Fig. 1 is a front view of an indoor device 10, an outdoor device 30, and a remote controller 40 provided at an air-conditioner 100 according to a first embodiment.

The air-conditioner 100 is equipment configured to perform air conditioning in such a manner that refrigerant circulates in a refrigeration cycle (a heat pump cycle). As illustrated in Fig. 1, the air-conditioner 100 includes the indoor device 10 placed inside a room (an air conditioning target space), the outdoor device 30 placed outside the room, and the remote controller 40 to be operated by a user.

The indoor device 10 includes a remote control transceiver 11. The remote control transceiver 11 is configured to transmit/receive a predetermined signal to/from the remote controller 40 via, e.g., infrared communication. For example, the remote control transceiver 11 receives, from the remote controller 40, signals for an operation/stop command, a set temperature change, an operation mode change, and a timer setting. Moreover, the remote control transceiver 11 transmits, e.g., an indoor temperature detection value to the remote controller 40.

Note that although not shown in Fig. 1, the indoor device 10 and the outdoor device 30 are connected to each other via a refrigerant pipe, and are connected to each other via a communication line.

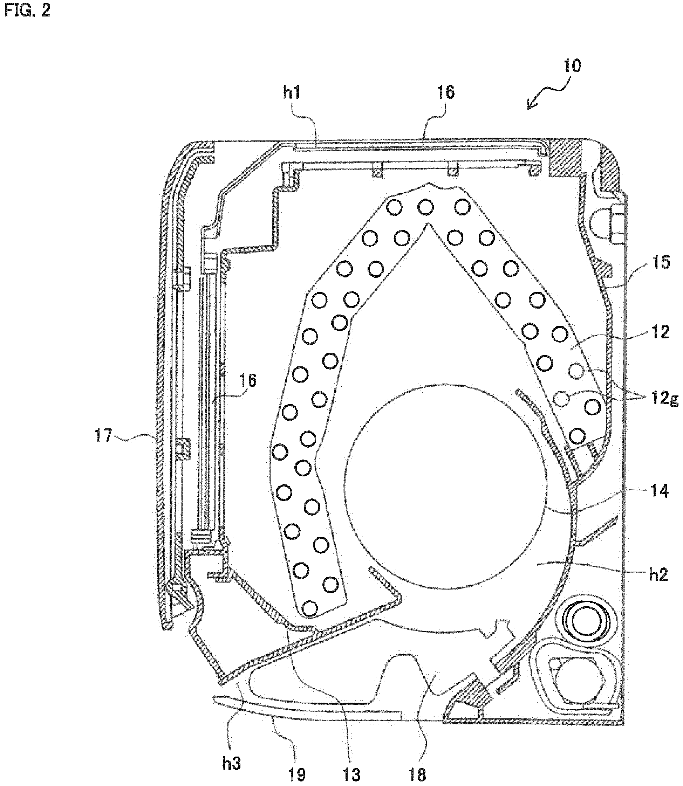

Fig. 2 is a longitudinal sectional view of the indoor device 10.

The indoor device 10 includes, in addition to the above-described remote control transceiver 11 (see Fig. 1), an indoor heat exchanger 12, a drain pan 13, an indoor fan 14, a housing base 15, filters 16, 16, a front panel 17, a right-to-left wind deflector 18, and an upper-to-lower wind deflector 19.

The indoor heat exchanger 12 is a heat exchanger configured to exchange heat between refrigerant flowing in a heat transfer pipe 12g and indoor air.

The drain pan 13 is configured to receive water dropping from the indoor heat exchanger 12, and is arranged below the indoor heat exchanger 12. Note that the water having dropped onto the drain pan 13 is discharged to the outside via a drain hose (not shown).

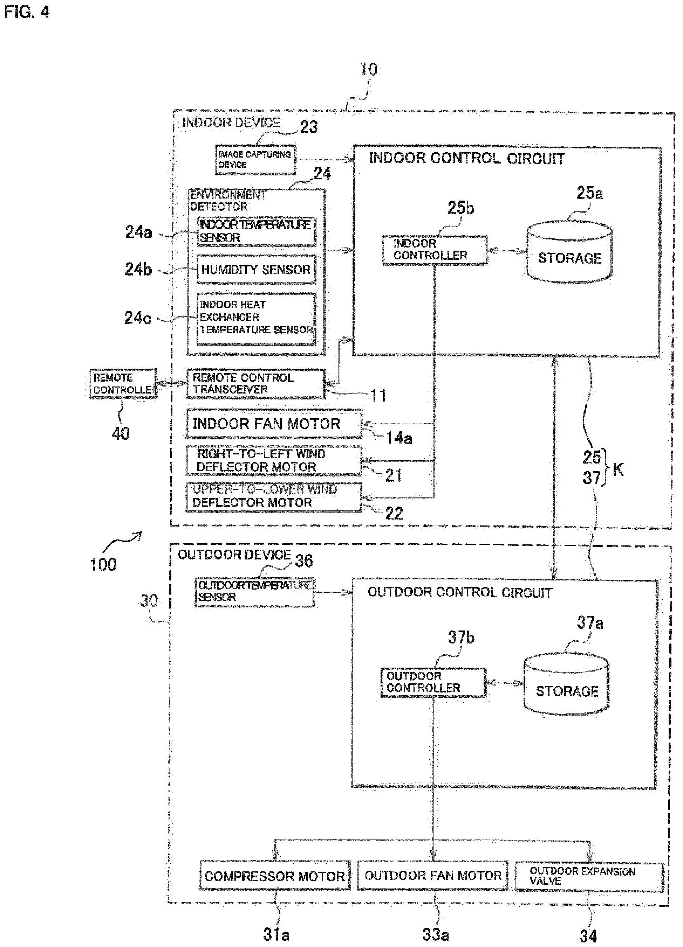

The indoor fan 14 is, for example, a cylindrical cross-flow fan, and is driven by an indoor fan motor 14a (see Fig. 4).

The housing base 15 is a housing in which equipment such as the indoor heat exchanger 12 and the indoor fan 14 is placed.

The filters 16, 16 are configured to remove dust from air taken in through, e.g., an air suction port h1, and is placed on upper and front sides of the indoor heat exchanger 12.

The front panel 17 is a panel placed to cover the front filter 16, and is rotatable forward about a lower end thereof as an axis. Note that it may be configured such that the front panel 17 is not rotatable.

The right-to-left wind deflector 18 is a plate-shaped member configured to adjust, in a right-to-left direction, the direction of an air flow blown into the room. The right-to-left wind deflector 18 is arranged downward of the indoor fan 14, and is rotatable in the right-to-left direction by a right-to-left wind deflector motor 21 (see Fig. 4).

The upper-to-lower wind deflector 19 is a plate-shaped member configured to adjust, in an upper-to-lower direction, the direction of the air flow blown into the room. The upper-to-lower wind deflector 19 is arranged downward of the indoor fan 14, and is rotatable in the upper-to-lower direction by an upper-to-lower wind deflector motor 22 (see Fig. 4).

Air sucked through the air suction port h1 exchanges heat with refrigerant flowing in the heat transfer pipe 12g, and the heat-exchanged air is guided to a wind outlet path h2. The air flowing in the wind outlet path h2 is guided in a predetermined direction by the right-to-left wind deflector 18 and the upper-to-lower wind deflector 19, and is further blown into the room through an air blow port h3.

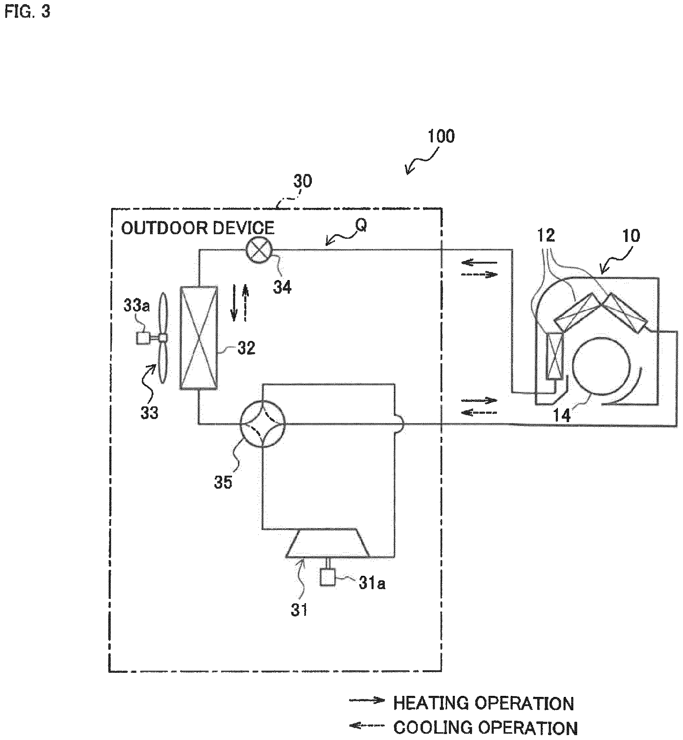

Fig. 3 is a diagram for describing a refrigerant circuit Q of the air-conditioner 100.

Note that solid arrows of Fig. 3 indicate a refrigerant flow in heating operation.

Moreover, dashed arrows of Fig. 3 indicate a refrigerant flow in cooling operation.

As illustrated in Fig. 3, the outdoor device 30 includes a compressor 31, an outdoor heat exchanger 32, an outdoor fan 33, an outdoor expansion valve 34 (a first expansion valve), and a four-way valve 35.

The compressor 31 is equipment configured to compress low-temperature low-pressure gas refrigerant by driving of a compressor motor 31a, thereby discharging high-temperature high-pressure gas refrigerant.

The outdoor heat exchanger 32 is a heat exchanger configured to exchange heat between refrigerant flowing in a heat transfer pipe (not shown) of the outdoor heat exchanger 32 and external air sent from the outdoor fan 33.

The outdoor fan 33 is a fan configured to send the external air to the outdoor heat exchanger 32 by driving of an outdoor fan motor 33a (see Fig. 4), and is placed in the vicinity of the outdoor heat exchanger 32.

The outdoor expansion valve 34 has the function of depressurizing refrigerant condensed in a "condenser" (one of the outdoor heat exchanger 32 and the indoor heat exchanger 12). Note that the refrigerant depressurized in the outdoor expansion valve 34 is guided to an "evaporator" (the other one of the outdoor heat exchanger 32 and the indoor heat exchanger 12).

The four-way valve 35 is a valve configured to switch a refrigerant flow path according to an operation mode of the air-conditioner 100. That is, in the cooling operation (see the dashed arrows), refrigerant circulates in the refrigeration cycle in the refrigerant circuit Q configured such that the compressor 31, the outdoor heat exchanger 32 (the condenser), the outdoor expansion valve 34, and the indoor heat exchanger 12 (the evaporator) are sequentially connected in an annular shape via the four-way valve 35.

Moreover, in the heating operation (see the solid arrows), refrigerant circulates in the refrigeration cycle in the refrigerant circuit Q configured such that the compressor 31, the indoor heat exchanger 12 (the condenser), the outdoor expansion valve 34, and the outdoor heat exchanger 32 (the evaporator) are sequentially connected in an annular shape via the four-way valve 35.

That is, in the refrigerant circuit Q configured such that refrigerant circulates sequentially in the compressor 31, the "condenser," the outdoor expansion valve 34, and the "evaporator" in the refrigeration cycle, one of the "condenser" and the "evaporator" is the outdoor heat exchanger 32, and the other one is the indoor heat exchanger 12.

Fig. 4 is a functional block diagram of the air-conditioner 100.

The indoor device 10 illustrated in Fig. 4 includes, in addition to the above-described configurations, an image capturing device 23, an environment detector 24, and an indoor control circuit 25.

The image capturing device 23 is configured to capture an image of the inside of the room (the air conditioning target space), and includes an image capturing element such as a charge coupled device (CCD) sensor or a complementary metal oxide semiconductor (CMOS) sensor. Based on an image capturing result of the image capturing device 23, a person (a person-in-room) in the room is detected by the indoor control circuit 25. Note that a "person detector" configured to detect the person in the air conditioning target space includes the image capturing device 23 and the indoor control circuit 25.

The environment detector 24 has the function of detecting an indoor state or an equipment state of the indoor device 10, and includes an indoor temperature sensor 24a, a humidity sensor 24b, and an indoor heat exchanger temperature sensor 24c.

The indoor temperature sensor 24a is a sensor configured to detect an indoor (air conditioning target space) temperature. The indoor temperature sensor 24a is placed on an air suction side with respect to the filters 16, 16 (see Fig. 2). Thus, upon freezing of the indoor heat exchanger 12 as described later, a detection error due to influence of heat radiation can be reduced.

The humidity sensor 24b is a sensor configured to detect the humidity of air in the room (the air conditioning target space), and is placed at a predetermined position of the indoor device 10.

The indoor heat exchanger temperature sensor 24c is a sensor configured to detect the temperature of the indoor heat exchanger 12 (see Fig. 2), and is placed at the indoor heat exchanger 12.

Detection values of the indoor temperature sensor 24a, the humidity sensor 24b, and the indoor heat exchanger temperature sensor 24c are output to the indoor control circuit 25.

Although not shown in the figure, the indoor control circuit 25 includes electronic circuits such as a central processing unit (CPU), a read only memory (ROM), a random access memory (RAM), and various interfaces. The CPU executes various types of processing in such a manner that programs stored in the ROM are read and loaded into the RAM.

As illustrated in Fig. 4, the indoor control circuit 25 includes a storage 25a and an indoor controller 25b.

The storage 25a is configured to store, in addition to predetermined programs, the image capturing result of the image capturing device 23, the detection result of the environment detector 24, and data received via the remote control transceiver 11, for example.

The indoor controller 25b is configured to execute predetermined control based on the data stored in the storage 25a. Note that the processing executed by the indoor controller 25b will be described later.

The outdoor device 30 includes, in addition to the above-described configurations, an outdoor temperature sensor 36 and an outdoor control circuit 37.

The outdoor temperature sensor 36 is a sensor configured to detect an outdoor temperature (an external air temperature), and is placed at a predetermined spot of the outdoor device 30. Note that although not shown in Fig. 4, the outdoor device 30 also includes sensors each configured to detect, e.g., the suction temperature, discharge temperature, and discharge pressure of the compressor 31 (see Fig. 3). A detection value of each sensor including the outdoor temperature sensor 36 is output to the outdoor control circuit 37.

Although not shown in the figure, the outdoor control circuit 37 includes electronic circuits such as a CPU, a ROM, a RAM, and various interfaces, and is connected to the indoor control circuit 25 via a communication line. As illustrated in Fig. 4, the outdoor control circuit 37 includes a storage 37a and an outdoor controller 37b.

The storage 37a is configured to store, in addition to predetermined programs, the detection value of each sensor including the outdoor temperature sensor 36, for example.

The outdoor controller 37b is configured to control the compressor motor 31a (i.e., the compressor 31), the outdoor fan motor 33 a, the outdoor expansion valve 34, etc. based on the data stored in the storage 37a. Hereinafter, the indoor control circuit 25 and the outdoor control circuit 37 will be referred to as a "controller K."

Next, the processing of cleaning the indoor heat exchanger 12 (see Fig. 2) will be described.

As described above, the filters 16 (see Fig. 2) configured to collect grit and dust are placed on the upper and front sides (the air suction side) of the indoor heat exchanger 12. However, fine grit and dust sometimes pass through the filters 16 to adhere to the indoor heat exchanger 12. For this reason, the indoor heat exchanger 12 is preferably cleaned on a regular basis. Thus, in the present embodiment, moisture contained in air taken into the indoor device 30 is frozen in the indoor heat exchanger 12, and thereafter, ice on the indoor heat exchanger 12 is melted to clean the indoor heat exchanger 12. Such a series of processing will be referred to as "cleaning processing" for the indoor heat exchanger 12.

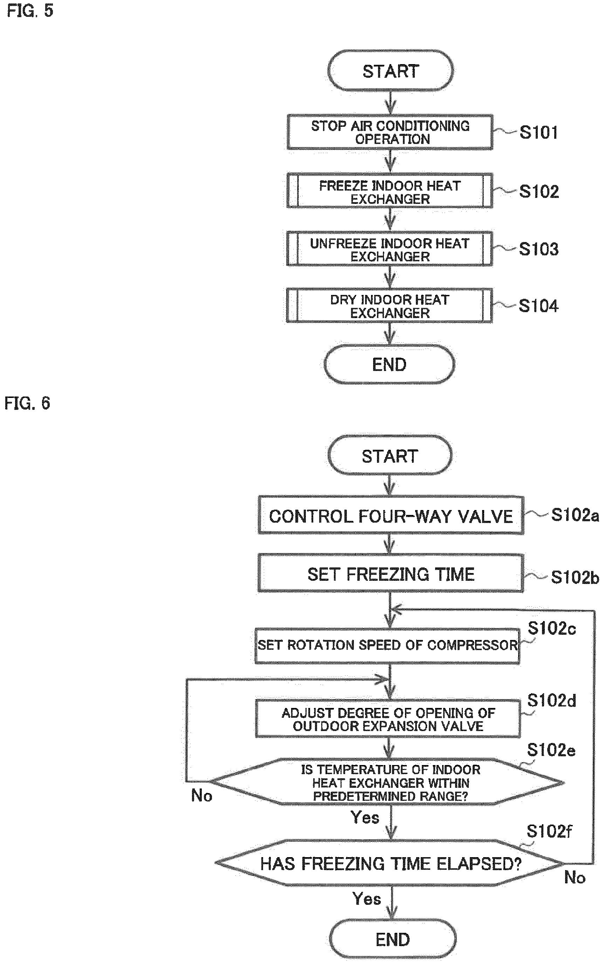

Fig. 5 is a flowchart (see Figs. 3 and 4 as necessary) of the cleaning processing executed by the controller K of the air-conditioner 100. Note that it is assumed that predetermined air conditioning operation (the cooling operation, the heating operation, etc.) has been performed until "START" of Fig. 5.

Moreover, it is assumed that a condition for starting the cleaning processing for the indoor heat exchanger 12 is satisfied at "START." This "cleaning processing start condition" is, for example, a condition where an integrated value of air conditioning operation execution time after the end of previous cleaning processing reaches a predetermined value. Note that a time period for performing the cleaning processing may be set by user's operation of the remote controller 40.

At a step S101, the controller K stops the air conditioning operation for predetermined time (e.g., several minutes). The above-described predetermined time is time for stabilizing the refrigeration cycle, and is set in advance.

For example, when the heating operation having been performed until "START" is interrupted for freezing the indoor heat exchanger 12 (S102), the controller K controls the four-way valve 35 such that refrigerant flows in a direction opposite to that in the heating operation. If a refrigerant flow direction is suddenly changed, overload is on the compressor 31, resulting in a probability that the refrigeration cycle is unstable. For this reason, in the present embodiment, the air conditioning operation is stopped for the predetermined time in advance of freezing (S102) of the indoor heat exchanger 12 (S101). In this case, the controller K may freeze the indoor heat exchanger 12 after a lapse of the predetermined time after the air conditioning operation has been stopped.

Note that in a case where the cooling operation is interrupted for freezing the indoor heat exchanger 12, the processing of the step S101 may be omitted. This is because the refrigerant flow direction in the cooling operation (at "START") and the refrigerant flow direction during freezing (S102) of the indoor heat exchanger 12 are the same as each other.

Next, at the step S102, the controller K freezes the indoor heat exchanger 12. That is, the controller K causes the indoor heat exchanger 12 to function as the evaporator, thereby forming frost on a surface of the indoor heat exchanger 12 from moisture contained in air taken into the indoor device 10 and freezing the indoor heat exchanger 12.

At a step S103, the controller K unfreezes the indoor heat exchanger 12. For example, the controller K increases the degree of opening of the outdoor expansion valve 34, thereby causing refrigerant in the outdoor heat exchanger 32 to flow into the indoor heat exchanger 12. In this manner, ice on the surface of the indoor heat exchanger 12 is melted, and the indoor heat exchanger 12 is unfrozen. At this point, the degree of opening of the outdoor expansion valve 34 is preferably the degree for fully opening the outdoor expansion valve 34. Thus, warm refrigerant present in the outdoor heat exchanger 32 is guided to the indoor heat exchanger 12, and therefore, unfreezing of the indoor heat exchanger 12 can be performed in a short amount of time. Note that the indoor heat exchanger 12 may function as the condenser to melt ice on the surface of the indoor heat exchanger 12 and unfreeze the indoor heat exchanger 12. In this manner, grit and dust adhering to the indoor heat exchanger 12 are washed away.

At a step S104, the controller K dries the indoor heat exchanger 12. For example, the controller K drives the indoor fan 14 to dry water on the surface of the indoor heat exchanger 12. Thus, the indoor heat exchanger 12 can be brought into a clean state. After the processing of the step S104, the controller K ends a series of processing (END).

Fig. 6 is a flowchart (see Figs. 3 and 4 as necessary) of the processing (S102 of Fig. 5) of freezing the indoor heat exchanger 12.

At a step S102a, the controller K controls the four-way valve 35. That is, the controller K controls the four-way valve 35 such that the outdoor heat exchanger 32 functions as the condenser and the indoor heat exchanger 12 functions as the evaporator. Note that in a case where the cooling operation is performed right before the "cleaning processing" (a series of processing illustrated in Fig. 5), a control device maintains the state of the four-way valve 35 at the step S102a.

At a step S102b, the controller K sets freezing time. Specifically, the controller K sets the freezing time based on the relative humidity of the indoor (air conditioning target space) air. Note that the "freezing time" is time for which predetermined control (S102c to S102e) for freezing the indoor heat exchanger 12 is continued.

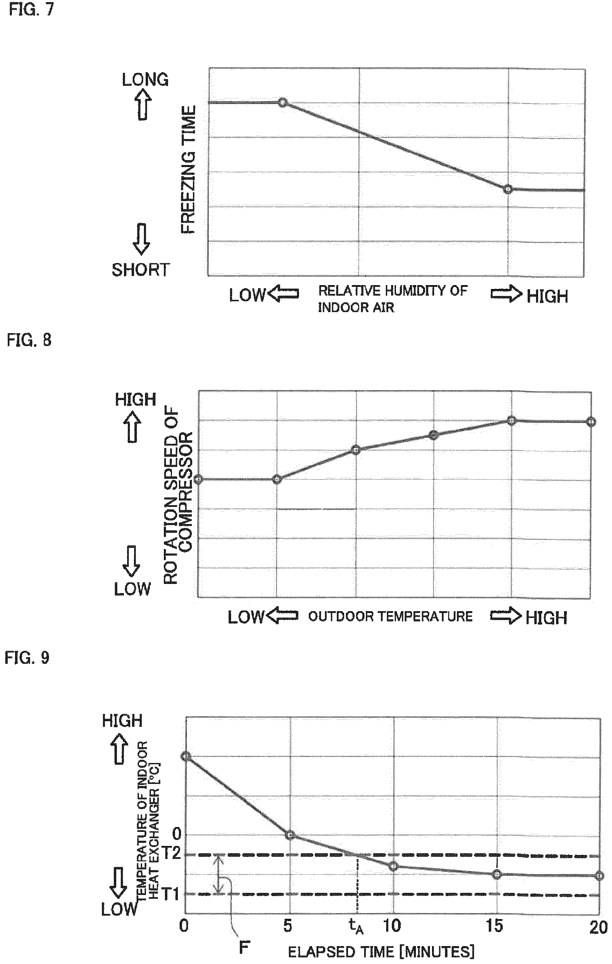

Fig. 7 is a map of a relationship between the indoor air relative humidity and the freezing time.

The horizontal axis of Fig. 7 is the indoor air relative humidity, and is detected by the humidity sensor 24b (see Fig. 4). The vertical axis of Fig. 7 is the freezing time set corresponding to the indoor air relative humidity.

As illustrated in Fig. 7, the controller K shortens the freezing time for freezing the indoor heat exchanger 12 as the indoor air relative humidity increases. This is because a higher indoor air relative humidity results in a greater amount of moisture contained in a predetermined volume of indoor air and more moisture adherence to the indoor heat exchanger 12. The freezing time is set as described above so that a moderate amount of moisture necessary for cleaning of the indoor heat exchanger 12 can adhere to the indoor heat exchanger 12 and can be further frozen.

Note that a predetermined mathematical expression may be used instead of the map (a data table) illustrated in Fig. 7. Alternatively, the controller K may set the freezing time based on an indoor air absolute humidity instead of the indoor air relative humidity. That is, the controller K may shorten the freezing time as the indoor air absolute humidity increases.

Next, at the step S102c of Fig. 6, the controller K sets the rotation speed of the compressor 31. That is, the controller K sets the rotation speed of the compressor motor 31a based on the outdoor temperature as the detection value of the outdoor temperature sensor 36, thereby driving the compressor 31.

Fig. 8 is a map of a relationship between the outdoor temperature and the rotation speed of the compressor 31.

Upon freezing of the indoor heat exchanger 12, the controller K increases the rotation speed of the compressor motor 31a as the outdoor temperature increases as illustrated in Fig. 8. This is because sufficient heat radiation from the outdoor heat exchanger 32 is necessary for drawing heat from the indoor air in the indoor heat exchanger 12. For example, in the case of a relatively-high outdoor temperature, the controller K increases the rotation speed of the compressor motor 31a to increase the temperature/pressure of refrigerant discharged from the compressor 31. Accordingly, heat exchange in the outdoor heat exchanger 32 is properly performed, and therefore, freezing of the indoor heat exchanger 12 is properly performed. Note that a predetermined mathematical expression may be used instead of the map (a data table) illustrated in Fig. 8.

Note that in the normal air conditioning operation (the cooling operation or the heating operation), the rotation speed of the compressor 31 is often controlled based on, e.g., the temperature of refrigerant discharged from the compressor 31. On the other hand, while the indoor heat exchanger 12 is being frozen, the temperature of refrigerant discharged from the compressor 31 tends to be lower than that in the normal air conditioning operation, and therefore, the outdoor temperature is used as another parameter.

Next, at the step S102d of Fig. 6, the controller K adjusts the degree of opening of the outdoor expansion valve 34.

Note that at the step S102d, the degree of opening of the outdoor expansion valve 34 is preferably decreased as compared to that in the normal cooling operation. Thus, lower-temperature lower-pressure refrigerant than that in the normal cooling operation flows into the indoor heat exchanger 12 via the outdoor expansion valve 34. Thus, water adhering to the indoor heat exchanger 12 is easily frozen, and power consumption necessary for freezing of the indoor heat exchanger 12 can be reduced.

At the step S102e, the controller K determines whether or not the temperature of the indoor heat exchanger 12 is within a predetermined range. The above-described "predetermined range" is a range in which moisture contained in air taken into the indoor device 10 can be frozen on the indoor heat exchanger 12, and is set in advance.

At the step S102e, in a case where the temperature of the indoor heat exchanger 12 is outside the predetermined range (S102e: No), the processing of the controller K returns to the step S102d. For example, in a case where the temperature of the indoor heat exchanger 12 is higher than the predetermined range, the controller K further decreases the degree of opening of the outdoor expansion valve 34 (S102e). As described above, the controller K adjusts the degree of opening of the outdoor expansion valve 34 such that the temperature of the indoor heat exchanger 12 falls within the predetermined range while the indoor heat exchanger 12 is being frozen.

Note that although not shown in Fig. 6, while the indoor heat exchanger 12 is being frozen (i.e., until the predetermined freezing time is elapsed), the controller K may bring the indoor fan 14 into a stop state, or may drive the indoor fan 14 at a predetermined rotation speed. This is because freezing of the indoor heat exchanger 12 advances in any cases.

Fig. 9 is a graph for describing one example of a temporal change in the temperature of the indoor heat exchanger 12.

The horizontal axis of Fig. 9 is time elapsed after "START" of Fig. 6.

The vertical axis of Fig. 9 is the temperature (the detection value of the indoor heat exchanger temperature sensor 24c: see Fig. 4) of the indoor heat exchanger 12. Note that a predetermined range F in which the temperature is lower than 0°C is a temperature range as a reference for determination at the step S102e (see Fig. 6), and is set in advance as described above.

As illustrated in Fig. 9, the temperature of the indoor heat exchanger 12 gradually decreases as the "elapsed time" after the start of the predetermined control for freezing the indoor heat exchanger 12 increases. After time t_{A} has elapsed, the temperature of the indoor heat exchanger 12 falls within the predetermined range F. Thus, reliability of the indoor device 10 can be ensured (an excessive decrease in the temperature of the indoor heat exchanger 12 can be suppressed) while the indoor heat exchanger 12 can be frozen.

Note that after the time t_{A} has elapsed, freezing of the indoor heat exchanger 12 advances, and therefore, the thickness of ice on the indoor heat exchanger 12 increases over time. Thus, a sufficient water amount necessary for cleaning of the indoor heat exchanger 12 can be frozen in the indoor heat exchanger 12.

At the step S102e of Fig. 6, in a case where the temperature of the indoor heat exchanger 12 falls within the predetermined range (S102e: Yes), the processing of the controller K proceeds to a step S102f.

At the step S102f, the controller K determines whether or not the freezing time set at the step S102b has elapsed. In a case where the predetermined freezing time has not elapsed after "START" (S102f: No), the processing of the controller K returns to the step S102c. On the other hand, in a case where the predetermined freezing time has elapsed after "START" (S102f: Yes), the controller K ends a series of processing of freezing the indoor heat exchanger 12 (END).

Note that the determination processing at the step S102f may be performed not based on the elapsed time after "START" of Fig. 6 but elapsed time (elapsed time after the time point t_{A} illustrated in Fig. 9) after the temperature of the indoor heat exchanger 12 has fallen within the predetermined range F.

Although not shown in Fig. 6, it is preferred that the controller K does not perform freezing of the indoor heat exchanger 12 in the case of an outdoor temperature of below zero. This is for preventing freezing of a great amount of water flowing down due to subsequent unfreezing of the indoor heat exchanger 12 in the drain hose (not shown) and therefore preventing interference with water discharge via the drain hose.

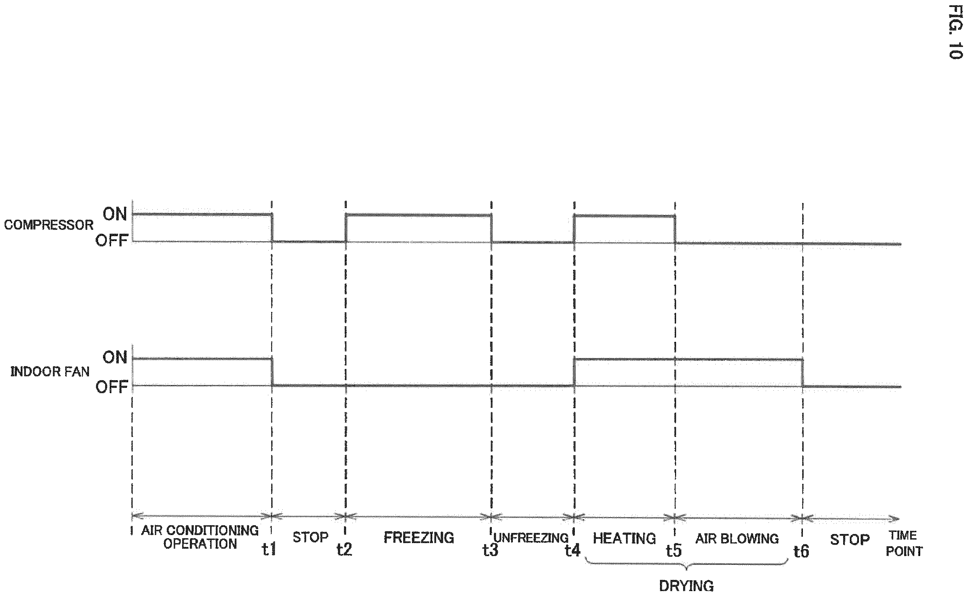

Fig. 10 is a chart for describing switching of ON/OFF of the compressor 31 and the indoor fan 14.

Note that the horizontal axis of Fig. 10 is a time point. Moreover, the vertical axis of Fig. 10 indicates ON/OFF of the compressor 31 and ON/OFF of the indoor fan 14.

In an example illustrated in Fig. 10, the predetermined air conditioning operation is performed until a time point t1, and the compressor 31 and the indoor fan 14 are driven (i.e., an ON state). Thereafter, at the time points t1 to t2, the compressor 31 and the indoor fan 14 are stopped (the step S101 of Fig. 5). Then, at the time points t2 to t3, freezing of the indoor heat exchanger 12 is performed (the step S102 of Fig. 5). The time at the time points t2 to t3 is the freezing time set at the step S102b (see Fig. 6).

In the example illustrated in Fig. 10, the indoor fan 14 is stopped during freezing of the indoor heat exchanger 12. Thus, no cold air is blown into the room, and therefore, the indoor heat exchanger 12 can be frozen without degrading comfortableness of the user. Note that processing after the time point t3 will be described later.

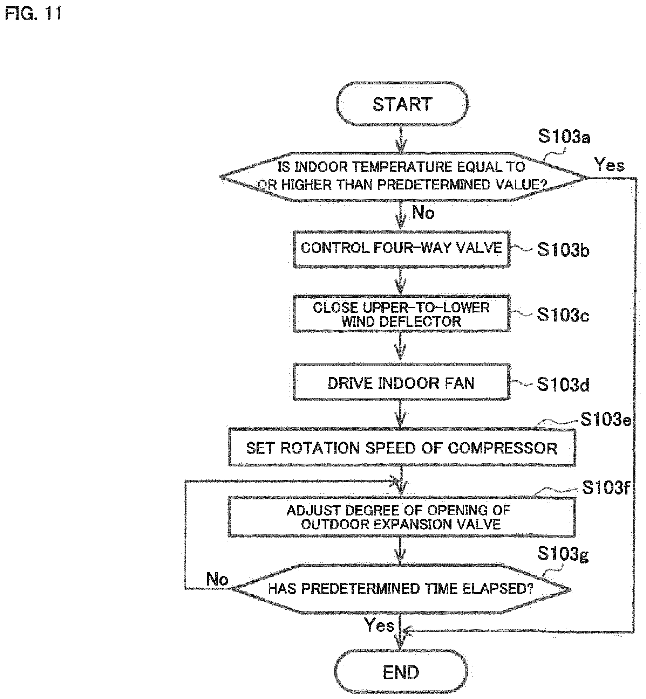

Fig. 11 is a flowchart of the processing (S103 of Fig. 5) of unfreezing the indoor heat exchanger 12 (see Figs. 3 and 4 as necessary).

The controller K executes a series of processing illustrated in Fig. 11 after the indoor heat exchanger 12 has been frozen by the above-described processing of the steps S102a to S102f(see Fig. 6).

At a step S103a, the controller K determines whether or not the indoor temperature (the air conditioning target space temperature) is equal to or higher than a predetermined value. The predetermined value is a threshold as a reference for determination on whether or not the indoor heat exchanger 12 is to function as the condenser, and is set in advance.

At the step S103a, in a case where the indoor temperature is equal to or higher than the predetermined value (S103a: Yes), the controller K ends the processing of unfreezing the indoor heat exchanger 12 (END). This is because, as subsequently described, the four-way valve 35 is controlled as in the heating operation upon unfreezing of the indoor heat exchanger 12, but balance with an evaporation side of the refrigeration cycle is lost due to extremely-high heat load on a condensation side in the case of an indoor temperature of equal to or higher than the predetermined value. Moreover, this is because ice on the indoor heat exchanger 12 is naturally melted over time in the case of a relatively-high indoor temperature.

At a step S103b, the controller K controls the four-way valve 35. That is, the controller K controls the four-way valve 35 such that the indoor heat exchanger 12 functions as the condenser and the outdoor heat exchanger 32 functions as the evaporator. That is, the controller K controls the four-way valve 35 as in the heating operation.

At a step S103c, the controller K closes the upper-to-lower wind deflector 19 (see Fig. 2). This can prevent water droplets from entering the room together with air even when the indoor fan 14 is subsequently driven (S103d).

At the step S103d, the controller K drives the indoor fan 14. Accordingly, air is taken in through the air suction port h1 (see Fig. 2), and the intake air further leaks into the room through, e.g., a clearance between the upper-to-lower wind deflector 19 and the front panel 17. Thus, an excessive increase in the temperature of the indoor heat exchanger 12 (the condenser) can be suppressed.

At a step S103e, the controller K sets the rotation speed of the compressor 31 to a predetermined value, and drives the compressor 31.

At a step S103f, the controller K adjusts the degree of opening of the outdoor expansion valve 34. As described above, the compressor 31 and the outdoor expansion valve 34 are controlled as necessary, and therefore, high-temperature refrigerant flows through the indoor heat exchanger 12 as the condenser. As a result, ice on the indoor heat exchanger 12 is melted at once, and therefore, grit and dust adhering to the indoor heat exchanger 12 are washed away. Then, water containing the grit and the dust drops onto the drain pan 13 (see Fig. 2), and is discharged to the outside through the drain hose (not shown).

At a step S103g, the controller K determines whether or not predetermined time has elapsed after "START" of Fig. 11. The predetermined time is time necessary for unfreezing the indoor heat exchanger 12, and is set in advance.

At the step S103g, in a case where the predetermined time has not elapsed after "START" (S103g: No), the processing of the controller K returns to the step S103f. On the other hand, in a case where the predetermined time has elapsed after "START" (S103g: Yes), the controller K ends a series of processing of unfreezing the indoor heat exchanger 12 (END).

Note that as illustrated in the time chart (the time points t3 to t4) of Fig. 10, the compressor 31 and the indoor fan 14 may be maintained in the stop state instead of a series of processing illustrated in Fig. 11: This is because ice on the indoor heat exchanger 12 is naturally melted at room temperature without causing the indoor heat exchanger 12 to function as the condenser. Thus, power consumption necessary for unfreezing the indoor heat exchanger 12 can be reduced. Moreover, water droplets adhering to the inside of the upper-to-lower wind deflector 19 (see Fig. 2) can be reduced.

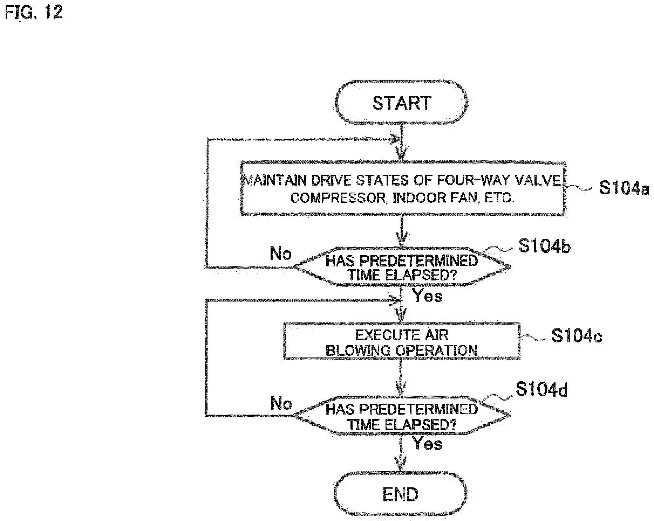

Fig. 12 is a flowchart of the processing (S104 of Fig. 5) of drying the indoor heat exchanger 12.

The controller K executes a series of processing illustrated in Fig. 12 after the indoor heat exchanger 12 has been unfrozen by the above-described processing (see Fig. 11) of the steps S103a to S103g.

At a step S104a, the controller K maintains drive states of the four-way valve 35, the compressor 31, the indoor fan 14, etc. That is, the controller K controls the four-way valve 35 as in unfreezing of the indoor heat exchanger 12, thereby continuously driving the compressor 31, the indoor fan 14, etc. The control similar to that in the heating operation is performed as described above. Thus, high-temperature refrigerant flows in the indoor heat exchanger 12, and air is taken into the indoor device 10. As a result, water adhering to the indoor heat exchanger 12 is evaporated.

Next, at a step S104b, the controller K determines whether or not predetermined time has elapsed after the start of the processing of the step S104a. In a case where the predetermined time has not elapsed (S104b: No), the processing of the controller K returns to the step S104a. On the other hand, in a case where the predetermined time has elapsed (S104b: Yes), the processing of the controller K proceeds to a step S104c.

At the step S104c, the controller K executes air blowing operation. That is, the controller K stops the compressor 31, and drives the indoor fan 14 at a predetermined rotation speed. In this manner, the inside of the indoor device 10 is dried, and therefore, an antibacterial/antifungal effect is provided.

Note that during the processing of the step S104a or the step S104c, the upper-to-lower wind deflector 19 (see Fig. 2) may be closed or opened.

Next, at a step S104d, the controller K determines whether or not predetermined time has elapsed after the start of the processing of the step S104c. In a case where the predetermined time has not elapsed (S104d: No), the processing of the controller K returns to the step S104c. On the other hand, in a case where the predetermined time has elapsed (S104d: Yes), the controller K ends a series of processing of drying the indoor heat exchanger 12 (END).

Note that in the time chart illustrated in Fig. 10, air blowing (S104c of Fig. 12) is performed at the time points t5 to t6 after heating (S104a of Fig. 12) has been performed at the time points t4 to t5. Heating and air blowing are sequentially performed as described above, and in this manner, the indoor heat exchanger 12 can be effectively dried.

### <Advantageous Effects>

According to the first embodiment, the controller K unfreezes ice on the indoor heat exchanger 12 (S103) after the indoor heat exchanger 12 has been frozen (S102 of Fig. 5). With this configuration, more moisture (ice) can adhere to the indoor heat exchanger 12 as compared to the normal cooling operation. By unfreezing of the indoor heat exchanger 12, a great amount of water flows on the surface of the indoor heat exchanger 12, and therefore, grit and dust adhering to the indoor heat exchanger 12 can be washed away.

Upon freezing of the indoor heat exchanger 12, the controller K sets the freezing time based on the indoor air relative humidity (S102b of Fig. 6, see Fig. 7), for example. With this configuration, a moderate amount of water necessary for cleaning the indoor heat exchanger 12 can be frozen on the indoor heat exchanger 12.

Moreover, upon freezing of the indoor heat exchanger 12, the controller K sets the rotation speed of the compressor motor 31a based on the outdoor temperature (S102c of Fig. 6, see Fig. 8). With this configuration, during freezing of the indoor heat exchanger 12, heat radiation from the outdoor heat exchanger 32 can be properly performed.

Further, upon freezing of the indoor heat exchanger 12, the controller K adjusts the degree of opening of the outdoor expansion valve 34 based on the temperature of the indoor heat exchanger 12 (S102d, S102e of Fig. 6). With this configuration, the temperature of refrigerant flowing in the indoor heat exchanger 12 can be sufficiently lowered, and moisture contained in air taken into the indoor device 10 can be frozen on the indoor heat exchanger 12.

### «Second Embodiment»

A second embodiment is different from the first embodiment in that an indoor fan 14 is driven at low speed upon freezing of an indoor heat exchanger 12 (see Fig. 2). Moreover, the second embodiment is different from the first embodiment in that an upper-to-lower wind deflector 19 (see Fig. 2) faces upward and a right-to-left wind deflector 18 (see Fig. 2) faces laterally upon freezing of the indoor heat exchanger 12. Note that the second embodiment is similar to the first embodiment on other points (e.g., the configuration of the air-conditioner 100 illustrated in Figs. 1 to 4 and the flowchart of Fig. 5). Thus, differences from the first embodiment will be described, and description of overlapping contents will be omitted.

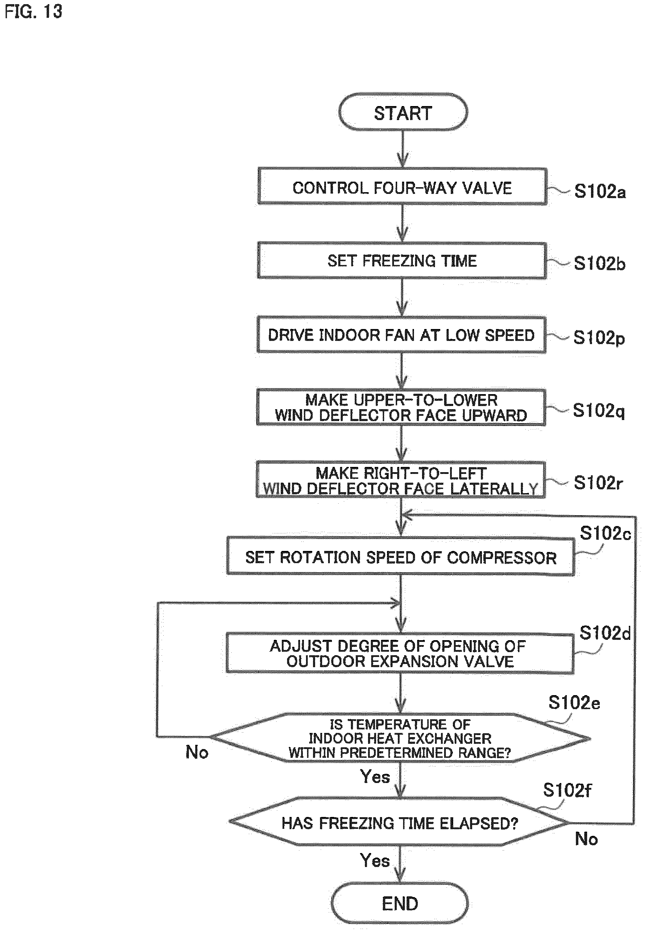

Fig. 13 is a flowchart of the processing (S102 of Fig. 5) of freezing the indoor heat exchanger 12 in an air-conditioner 100 according to the second embodiment (see Figs. 3 and 4 as necessary). Note that the same step numbers are used to represent processing similar to that of Fig. 6.

After freezing time has been set at a step S102b, processing of a controller K proceeds to a step S102p.

At the step S102p, the controller K drives the indoor fan 14 at low speed. That is, the controller K decreases, upon freezing of the indoor heat exchanger 12, the rotation speed of the indoor fan 14 configured to send indoor air to the indoor heat exchanger 12 as compared to a rated rotation speed. In this manner, during freezing of the indoor heat exchanger 12, the volume of cold air blown from an indoor device 10 can be reduced, and degradation of comfortableness of a user can be reduced.

At a step S102q, the controller K makes the upper-to-lower wind deflector 19 face upward from the horizontal plane. That is, the controller K controls an upper-to-lower wind deflector motor 22 (see Fig. 4) such that cold air is blown upward diagonally from the indoor device 10. In this manner, during freezing of the indoor heat exchanger 12, direct contact of the cold air blown from the indoor device 10 with the user can be prevented.

At a step S102r, the controller K makes the right-to-left wind deflector 18 face laterally. That is, the controller K controls a right-to-left wind deflector motor 21 (see Fig. 4) such that the right-to-left wind deflector 18 faces right or left as viewed from the indoor device 10. In this manner, during freezing of the indoor heat exchanger 12, direct contact of the cold air blown from the indoor device 10 with the user can be prevented.

After the processing of the step S102r has been performed, the processing of the controller K proceeds to a step S102c. Note that in addition to the processing of the steps S102c to S102f, unfreezing and drying (S103, S104 of Fig. 5) of the indoor heat exchanger 12 are similar to those of the first embodiment, and therefore, description thereof will be omitted.

### <Advantageous Effects>

According to the second embodiment, the controller K drives the indoor fan 14 at low speed upon freezing of the indoor heat exchanger 12 (S102p of Fig. 13). With this configuration, the volume of cold air blown from the indoor device 10 can be reduced. Moreover, upon freezing of the indoor heat exchanger 12, the controller K makes the upper-to-lower wind deflector 19 face upward (S102q), and the right-to-left wind deflector 18 face laterally (S102r). With this configuration, direct contact of the cold air blown from the indoor device 10 with the user can be prevented, and degradation of comfortableness of the user can be reduced.

### «Third Embodiment»

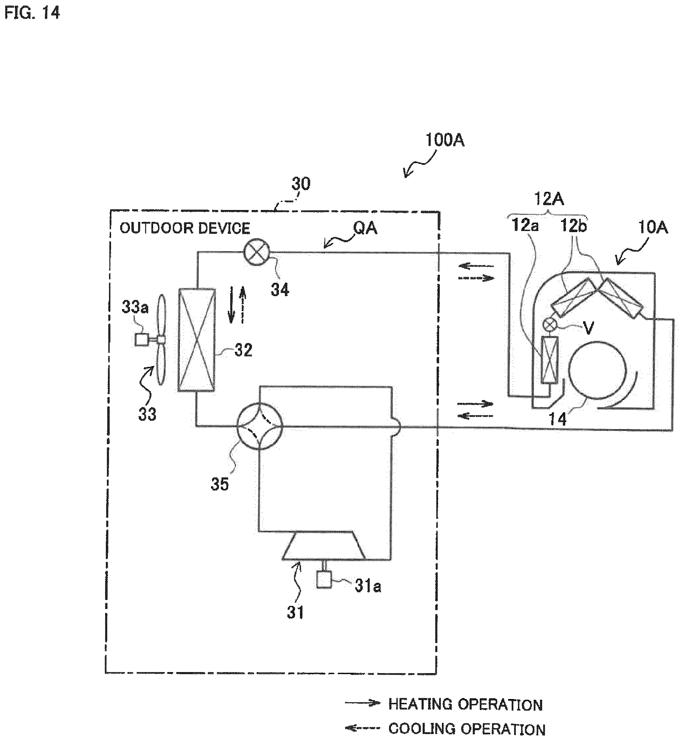

A third embodiment is different from the first embodiment in that an indoor heat exchanger 12A (see Fig. 14) has a first indoor heat exchanger 12a and a second indoor heat exchanger 12b and the first indoor heat exchanger 12a and the second indoor heat exchanger 12b are connected to each other via an indoor expansion valve V (see Fig. 14).

Moreover, the third embodiment is different from the first embodiment in that part of the indoor heat exchanger 12A is frozen by so-called reheating dehumidification operation. Note that the third embodiment is similar to the first embodiment on other points (e.g., the configurations illustrated in Figs. 1 and 4 and the flowchart of Fig. 5). Thus, differences from the first embodiment will be described, and description of overlapping contents will be omitted.

Fig. 14 is a diagram for describing a refrigerant circuit QA of an air-conditioner 100A according to the third embodiment.

As illustrated in Fig. 14, an indoor device 10A includes, for example, the indoor heat exchanger 12A, the indoor expansion valve V (a second expansion valve), and an indoor fan 14. Moreover, the indoor heat exchanger 12A includes the first indoor heat exchanger 12a and the second indoor heat exchanger 12b. The first indoor heat exchanger 12a and the second indoor heat exchanger 12b are connected to each other via the indoor expansion valve V, thereby forming the indoor heat exchanger 12A. Moreover, in an example illustrated in Fig. 14, the second indoor heat exchanger 12b is positioned above the first indoor heat exchanger 12a.

In normal air conditioning operation (cooling operation, heating operation, etc.), the indoor expansion valve V is controlled to a fully-open state, and the degree of opening of an outdoor expansion valve 34 is adjusted as necessary. On the other hand, in the so-called reheating dehumidification operation, the outdoor expansion valve 34 is controlled to a fully-open state, and the degree of opening of the indoor expansion valve V is adjusted as necessary. Note that the reheating dehumidification operation will be described later.

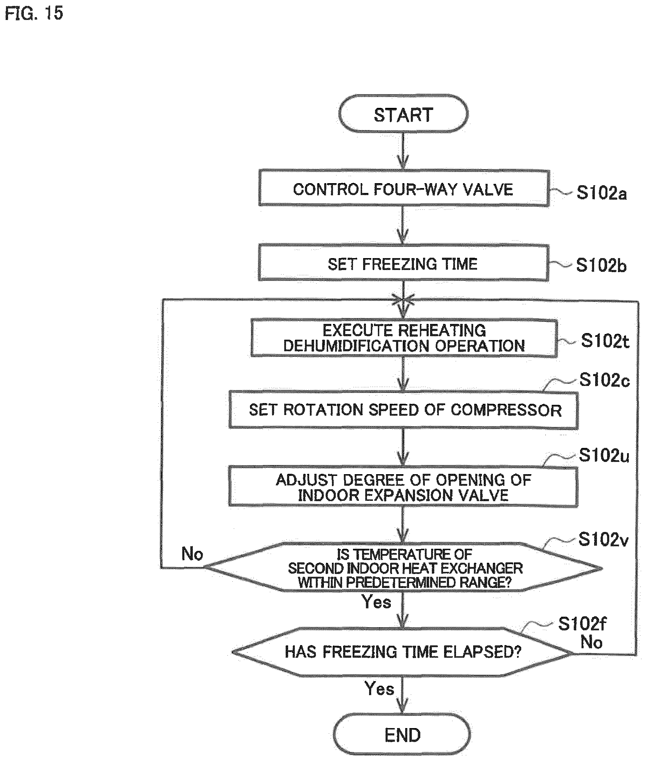

Fig. 15 is a flowchart of the processing (S102 of Fig. 5) of freezing the second indoor heat exchanger 12b (see Fig. 14 as necessary).

After freezing time has been set at a step S102b, processing of a controller K proceeds to a step S102t.

At the step S102t, the controller K executes the reheating dehumidification operation. That is, the controller K controls a four-way valve 35 such that an outdoor heat exchanger 32 and the first indoor heat exchanger 12a function as condensers and the second indoor heat exchanger 12b functions as an evaporator. In other words, the controller K causes one (the second indoor heat exchanger 12b), which is positioned downstream of the indoor expansion valve V, of the first indoor heat exchanger 12a or the second indoor heat exchanger 12b to function as the evaporator.

Further, the controller K fully opens the outdoor expansion valve 34, and brings the indoor expansion valve V to a predetermined degree of opening. In this manner, low-temperature air subjected to heat exchange in the second indoor heat exchanger 12b as the evaporator is moderately heated in the first indoor heat exchanger 12a as the other heat exchanger as the condenser, and is dehumidified.

After the processing of the step S102t has been performed, the controller K sets, at a step S102c, the rotation speed of a compressor 31, thereby driving the compressor 31 at such a rotation speed.

At a step S102u, the controller K adjusts the degree of opening of the indoor expansion valve V as necessary.

Next, at a step S102v, the controller K determines whether or not the temperature of the second indoor heat exchanger 12b is within a predetermined range. In a case where the temperature of the second indoor heat exchanger 12b is outside the predetermined range (S102v: No), the processing of the controller K returns to the step S 102t. For example, in a case where the temperature of the second indoor heat exchanger 12b is higher than the predetermined range, the controller K further decreases the degree of opening of the indoor expansion valve V (S102u). In this manner, the temperature of refrigerant flowing in the second indoor heat exchanger 12b can be decreased, and the second indoor heat exchanger 12b can be frozen.

On the other hand, in a case where the temperature of the second indoor heat exchanger 12b is within the predetermined range (S102v: Yes), the processing of the controller K proceeds to a step S102f.

At the step S 102f, the controller K determines whether or not predetermined time has elapsed after "START" of Fig. 15. In a case where the predetermined time has not elapsed after "START" (S102f: No), the processing of the controller K returns to the step S102t. On the other hand, in a case where the predetermined time has elapsed after "START" (S102f: Yes), the controller K ends a series of processing of freezing the second indoor heat exchanger 12b.

Note that the processing of unfreezing the second indoor heat exchanger 12b and drying the first indoor heat exchanger 12a and the second indoor heat exchanger 12b is similar to that in the first embodiment (see Figs. 11 and 12), and therefore, description thereof will be omitted. Note that upon unfreezing, the degrees of opening of the indoor expansion valve V and the outdoor expansion valve 34 are increased such that refrigerant in the outdoor heat exchanger 32 flows into the indoor heat exchanger 12, and in this manner, ice on a surface of the indoor heat exchanger 12 is melted and the indoor heat exchanger 12 is unfrozen. At this point, the degrees of opening of the indoor expansion valve V and the outdoor expansion valve 34 are preferably the degrees for fully opening the indoor expansion valve V and the outdoor expansion valve 34. In this manner, warm refrigerant present in the outdoor heat exchanger 32 is guided to the indoor heat exchanger 12, and therefore, unfreezing of the indoor heat exchanger 12 can be performed in a short amount of time. Note that upon unfreezing, the indoor heat exchanger 12 may function as the condenser. Upon unfreezing/drying, the controller K fully opens the indoor expansion valve V, and adjusts the degree of opening of the outdoor expansion valve 34 as necessary.

As described above, one (the second indoor heat exchanger 12b) of the first indoor heat exchanger 12a and the second indoor heat exchanger 12b illustrated in Fig. 14 is positioned above the other one (the first indoor heat exchanger 12a). According to this configuration, when ice on the frozen second indoor heat exchanger 12b is melted, water of such ice flows down onto the first indoor heat exchanger 12a. Thus, both the first indoor heat exchanger 12a and the second indoor heat exchanger 12b can be cleaned.

### <Advantageous Effects>

According to the third embodiment, the reheating dehumidification operation is performed so that the second indoor heat exchanger 12b can be frozen. Moreover, the first indoor heat exchanger 12a is positioned above the second indoor heat exchanger 12b. Thus, when the second indoor heat exchanger 12b is unfrozen, both the first indoor heat exchanger 12a and the second indoor heat exchanger 12b can be cleaned with water.

### «Fourth Embodiment»

A fourth embodiment is different from the first embodiment in that a controller K drives an indoor fan 14 and an outdoor fan 33 (see Fig. 4) at low speed upon freezing of an indoor heat exchanger 12 (see Fig. 2). Moreover, the fourth embodiment is different from the first embodiment in that the controller K sets the degree of opening of an outdoor expansion valve 34 to a predetermined value (a fixed value). Note that the fourth embodiment is similar to the first embodiment on other points (e.g., the configurations of the air-conditioner 100 illustrated in Figs. 1 to 4 and the flowchart of Fig. 5). Thus, differences from the first embodiment will be described, and description of overlapping contents will be omitted.

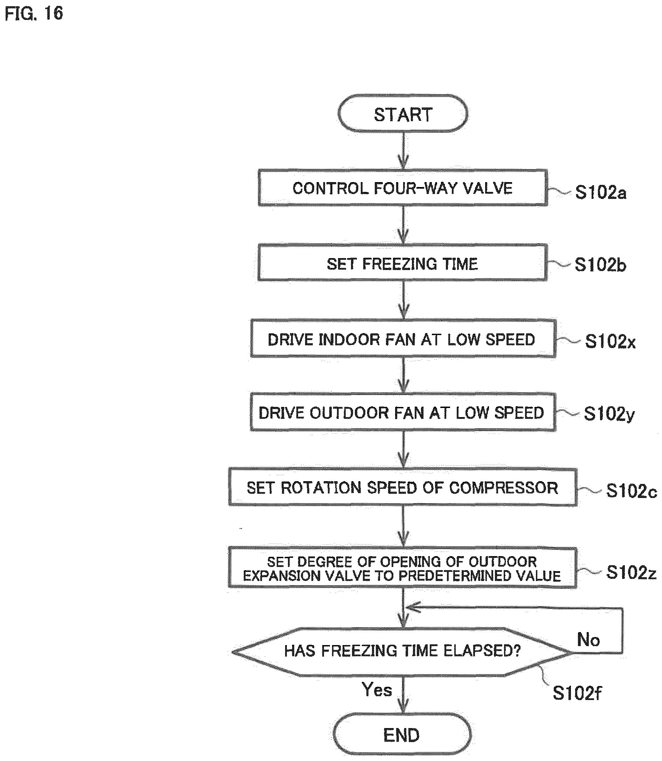

Fig. 16 is a flowchart of the processing of freezing the indoor heat exchanger 12 in an air-conditioner 100 according to the fourth embodiment (see Figs. 3 and 4 as necessary). Note that the same step numbers are used to represent processing similar to that of the first embodiment (see Fig. 6).

After freezing time has been set at a step S102b, processing of the controller K proceeds to a step S102x.

At the step S102x, the controller K drives the indoor fan 14 at low speed. That is, the controller K decreases the rotation speed of the indoor fan 14 configured to send indoor air to the indoor heat exchanger 12 as compared to a rated rotation speed upon freezing of the indoor heat exchanger 12. In this manner, during freezing of the indoor heat exchanger 12, the volume of cold air blown from an indoor device 10 can be reduced, and degradation of comfortableness of a user can be reduced.

At a step S102y, the controller K drives the outdoor fan 33 at low speed. That is, the controller K decreases the rotation speed of the outdoor fan 33 configured to send external air to an outdoor heat exchanger 32 as compared to a rated rotation speed. In this manner, balance between heat exchange between the external air and refrigerant in the outdoor heat exchanger 32 and heat exchange between the indoor air and refrigerant in the indoor heat exchanger 12 can be achieved. Note that the rotation speed of the outdoor fan 33 is, with reference to each rated rotation speed, preferably decreased as the rotation speed of the indoor fan 14 decreases.

At a step S102c, the controller K sets the rotation speed of a compressor 31. For example, the controller K sets, as in the first embodiment, the rotation speed of the compressor 31 based on a detection value of an outdoor temperature sensor 36.

Next, at a step S102z, the controller K sets the degree of opening of the outdoor expansion valve 34 to the predetermined value (the fixed value). The predetermined value is the degree of opening suitable for freezing the indoor heat exchanger 12, and is set in advance.

Next, at a step S102f, the controller K determines whether or not the freezing time set at the step S102b has elapsed. In a case where the predetermined freezing time has not elapsed (S102f: No), the controller K repeats the processing of the step S102f. On the other hand, in a case where the predetermined freezing time has elapsed, the controller K ends a series of processing of freezing the indoor heat exchanger 12 (END). Note that unfreezing and drying of the indoor heat exchanger 12 are similar to those in the first embodiment (S103, S104 of Fig. 5), and therefore, description thereof will be omitted.

### <Advantageous Effects>

According to the fourth embodiment, the controller K drives, upon freezing of the indoor heat exchanger 12, the indoor fan 14 at low speed (S102x of Fig. 16), and drives the outdoor fan 33 at low speed (S102y). With this configuration, during freezing of the indoor heat exchanger 12, the volume of cold air blown from the indoor device 10 can be reduced, and heat exchange on refrigerant condensation and evaporation sides can be balanced.

Moreover, upon freezing of the indoor heat exchanger 12, the controller K sets the degree of opening of the outdoor expansion valve 34 to the predetermined value (the fixed value). With this configuration, the processing of the controller K can be simplified.

### «Variations»

Each embodiment regarding, e.g., the air-conditioner 100 according to the present invention has been described above. However, the present invention is not limited to such description, and various changes can be made.

For example, each embodiment has described the processing (S102 to S104 of Fig. 5) of sequentially freezing, unfreezing, and drying the indoor heat exchanger 12, but the present invention is not limited to above. One of or both unfreezing and drying of the indoor heat exchanger 12 may be omitted. This is because even in this case, the indoor heat exchanger 12 is naturally unfrozen at room temperature and is cleaned with water from the indoor heat exchanger 12. Moreover, this is because the indoor heat exchanger 12 is dried by continuation of the stop state of each type of equipment and the subsequent air conditioning operation, for example.

Upon freezing of the indoor heat exchanger 12, the flow rate of refrigerant flowing in the indoor heat exchanger 12 may be decreased as compared to the normal air conditioning operation by the control of the compressor motor 31a (see Fig. 4). In this manner, refrigerant is fully evaporated in the middle of a flow path of the indoor heat exchanger 12. Thus, an upstream side of such a point is frozen, and a downstream side of such a point is not frozen. In this manner, part (the upstream side) of the indoor heat exchanger 12 can be frozen while cold air sent into the room can be reduced. Moreover, the rotation speed of the compressor motor 31a is relatively low, and therefore, power consumption of the air-conditioner 100 can be reduced.

Note that in the case of performing the above-described control, the upstream side of the indoor heat exchanger 12 is preferably positioned above the downstream side of the indoor heat exchanger 12. Thus, when the upstream side of the indoor heat exchanger 12 is unfrozen, water from such a portion flows down to the downstream side of the indoor heat exchanger 12. In this manner, both the upstream and downstream sides of the indoor heat exchanger 12 can be cleaned.

Each embodiment has described the processing of cleaning the indoor heat exchanger 12 by, e.g., freezing of the indoor heat . In other systems not part of the present invention, the indoor heat exchanger 12 may be cleaned by dew condensation on the indoor heat exchanger 12. In this case, the controller K decreases a refrigerant evaporation temperature than those in the normal cooling operation and the dehumidification operation. Specifically, the controller K calculates an indoor air dew point based on the detection value (the indoor air temperature) of the indoor temperature sensor 24a and the detection value (the indoor air relative humidity) of the humidity sensor 24b illustrated in Fig. 4. The controller K controls, e.g., the degree of opening of the outdoor expansion valve 34 such that the temperature of the indoor heat exchanger 12 is equal to or lower than the above-described dew point and is higher than a predetermined freezing temperature.

The above-described "freezing temperature" is a temperature at which moisture contained in the indoor air begins freezing on the indoor heat exchanger 12 when the indoor air temperature is decreased. Dew condensation is caused on the indoor heat exchanger 12 as described above so that the indoor heat exchanger 12 can be cleaned with such condensed water.

Note that control contents in the case of causing dew condensation on the indoor heat exchanger 12 is similar to those in the case of freezing the indoor heat exchanger 12, except that different degrees of opening of the outdoor expansion valve 34 are employed. Thus, matters described in each embodiment can be also applied to the case of causing dew condensation on the indoor heat exchanger 12.

After dew condensation has been caused on the indoor heat exchanger 12, the indoor heat exchanger 12 may be dried. That is, in the case of causing dew condensation on the indoor heat exchanger 12, the controller K causes the indoor heat exchanger 12 to function as the condenser, executes the air blowing operation, or continues the stop state of the equipment including the compressor 31, thereby drying the indoor heat exchanger 12.

The controller K may alternately perform freezing of the indoor heat exchanger 12 and dew condensation of the indoor heat exchanger 12 at predetermined intervals. For example, in a case where the cleaning processing for the indoor heat exchanger 12 is executed every time the predetermined start condition is satisfied, the controller K may alternately perform freezing of the indoor heat exchanger 12 and dew condensation of the indoor heat exchanger 12.

Note that the "predetermined start condition" is, for example, the condition where the air conditioning operation execution time is integrated after the end of the previous cleaning processing and such integrated time reaches the predetermined value. With this configuration, the frequency of blowing cold air into the room can be reduced as compared to the case of repeating cleaning of the indoor heat exchanger 12 by freezing, and comfortableness of the user can be enhanced.

The controller K may alternately perform freezing of the indoor heat exchanger 12 and the cooling operation after the heating operation at predetermined intervals. With this configuration, the frequency of blowing cold air into the room can be reduced as compared to the case of repeating cleaning of the indoor heat exchanger 12 by freezing.

Dew condensation of the indoor heat exchanger 12 and the cooling operation after the heating operation may be alternately performed at predetermined intervals. With this configuration, the frequency of blowing cold air into the room can be reduced as compared to the case of repeating cleaning of the indoor heat exchanger 12 by freezing.

The second embodiment has described the processing of making the upper-to-lower wind deflector 19 face upward (S102q of Fig. 13) and the right-to-left wind deflector 18 face laterally (S102r) by the controller K upon freezing of the indoor heat exchanger 12, but the present invention is not limited to above. For example, upon freezing of the indoor heat exchanger 12, the controller K may close the upper-to-lower wind deflector 19. With this configuration, cold air blown into the room can be reduced.

Moreover, upon freezing of the indoor heat exchanger 12, the controller K may bring the right-to-left wind deflector 18 into a state in which the right-to-left wind deflector 18 opens on both right and left sides (the right-to-left wind deflector 18 positioned on the right side faces right, and the right-to-left wind deflector 18 positioned on the left side faces left). With this configuration, direct contact of cold air with the user in the room can be reduced.

The controller K may control the upper-to-lower wind deflector motor 22 (see Fig. 4) and the right-to-left wind deflector motor 21 (see Fig. 4) based on the image capturing result of the air conditioning target space obtained by the image capturing device 23 (see Fig. 4). That is, upon freezing (or dew condensation) of the indoor heat exchanger 12, the controller K adjust, in the case of detecting a person based on the image capturing result of the air conditioning target space, the angles of the upper-to-lower wind deflector 19 and the right-to-left wind deflector 18 such that cold air is blown to a direction in which the person is not present. With this configuration, direct contact of cold air with the person in the room can be reduced.

Upon freezing of the indoor heat exchanger 12, the controller K may acquire an indoor thermal image by the indoor temperature sensor 24a (the person detector: see Fig. 4) such as a thermopile or a pyroelectric infrared sensor. In this case, the controller K adjusts the angles of the upper-to-lower wind deflector 19 and the right-to-left wind deflector 18 such that no cold air is sent to a high-temperature region (a region where a person might be present) in the room.

The second embodiment has described the processing (S102p of Fig. 13) of continuously driving the indoor fan 14 at low speed by the controller K upon freezing of the indoor heat exchanger 12, but the present invention is not limited to above. For example, upon freezing (or dew condensation) of the indoor heat exchanger 12, in a case where the temperature of the indoor heat exchanger 12 reaches equal to or lower than a predetermined value, the controller K may drive the indoor fan 14 at the predetermined rotation speed. With this configuration, cold air blown into the room can be reduced while the temperature of the indoor heat exchanger 12 is higher than the predetermined value. Moreover, after the temperature of the indoor heat exchanger 12 has reached equal to or lower than the predetermined value, the thickness of ice on the indoor heat exchanger 12 can be smoothly increased.

Upon freezing (or dew condensation) of the indoor heat exchanger 12, the controller K may alternately repeat driving/stop of the indoor fan 14. With this configuration, the frequency of blowing cold air into the room can be reduced as compared to the case of continuously driving the indoor fan 14.

The fourth embodiment has described the processing (S102c, S102z of Fig. 16) of setting the rotation speed of the compressor motor 31a and the degree of opening of the outdoor expansion valve 34 to the predetermined values by the controller K upon freezing of the indoor heat exchanger 12, but the present invention is not limited to above. For example, upon freezing (or dew condensation) of the indoor heat exchanger 12, the controller K may adjust the rotation speed of the compressor motor 31a such that the outdoor expansion valve 34 is maintained at a predetermined degree of opening and the temperature of the indoor heat exchanger 12 becomes closer to a predetermined target temperature. The rotation speed of the compressor motor 31 a is controlled as described above so that the indoor heat exchanger 12 can be frozen.

Upon freezing of the indoor heat exchanger 12, there is a probability that the load of the compressor 31 is relatively high. For this reason, the controller K preferably adjusts the freezing time, the rotation speed of the compressor 31, and the degree of opening of the outdoor expansion valve 34 such that the suction pressure, discharge pressure, discharge temperature, etc. of the compressor 31 are within the predetermined ranges.

For ensuring the reliability, predetermined upper limits may be provided for, e.g., the discharge temperatures of the indoor heat exchanger 12 and the compressor 31 and the current value and rotation speed of the compressor motor 31a.

In a case where the external air temperature is below zero, a compact heater (not shown) may be provided at a predetermined spot of the drain hose (not shown) such that water caused due to unfreezing of the indoor heat exchanger 12 is not frozen in the drain hose.

In a system not part of the claimed invention, there is a probability that upon freezing (or dew condensation) of the indoor heat exchanger 12, the detection error of the indoor temperature sensor 24a is increased due to the influence of heat radiation. That is, there is a probability that the detection value of the indoor temperature sensor 24a is smaller than an actual indoor air temperature. Thus, in the case of freezing (or causing dew condensation) the indoor heat exchanger 12, when any of the following situations is met, the controller K may correct the detection value of the indoor temperature sensor 24a:
(a) the indoor fan 14 is stopped, or is driven at a lower speed than the rated rotation speed;
(b) the upper-to-lower wind deflector 19 is closed;
(c) a shutter (not shown) dedicated to opening or closing a wind path on a downstream side of the indoor fan 14 is closed; and
(d) the temperature of the indoor heat exchanger 12 is equal to or lower than the predetermined value.

Note that an example of correction of the detection value of the indoor temperature sensor 24a will be described. The controller K corrects the detection value of the indoor temperature sensor 24a based on a distance (a fixed value) between the indoor heat exchanger 12 and the indoor temperature sensor 24a and the temperature of the indoor heat exchanger 12. For example, the controller K may correct and increase the detection value (the air temperature detection value for the air conditioning target space) of the indoor temperature sensor 24a illustrated in Fig. 4 as the temperature of the indoor heat exchanger 12 decreases. With this configuration, an error in the indoor temperature displayed on the remote controller 40 (see Fig. 4) can be reduced.

Moreover, the controller K may correct and increase the detection value of the indoor temperature sensor 24a as the elapsed time after the start of freezing of the indoor heat exchanger 12 increases.

According to the claimed invention, upon freezing of the indoor heat exchanger 12, the controller K does not use the detection value of the indoor temperature sensor 24a for the control of each type of equipment (i.e., ignores the detection value of the indoor temperature sensor 24a).

Moreover, upon freezing of the indoor heat exchanger 12, the controller K may repeat driving/stop of the indoor fan 14 in predetermined cycles (i.e., air may be newly taken into the indoor device 10), and in this manner, the detection error of the indoor temperature sensor 24a may be reduced.

The first embodiment has described the processing of not causing the indoor heat exchanger 12 to function as the condenser in a case where the "indoor temperature" is equal to or higher than the predetermined value (S103a of Fig. 11: Yes) upon unfreezing of the indoor heat exchanger 12, but the present invention is not limited to above. For example, upon unfreezing of the indoor heat exchanger 12, in a case where the "outdoor temperature" is equal to or higher than the predetermined value, the indoor heat exchanger 12 does not necessarily function as the condenser. This is because if the heating operation is performed with the outdoor temperature being equal to or higher than a predetermined value, refrigerant excessively absorbs heat in the outdoor heat exchanger 32 functioning as the evaporator, and therefore, heat exchange on the refrigerant condensation and evaporation sides cannot be balanced. In this case, the controller K executes the air blowing operation or continues the stop state of the equipment including the compressor 31, thereby unfreezing the indoor heat exchanger 12.

The first embodiment has described a case where the indoor heat exchanger 12 is unfrozen in such a manner that the indoor heat exchanger 12 functions as the condenser, but the present invention is not limited to above. That is, the controller K may execute the air blowing operation or continue the stop state of the equipment including the compressor 31, thereby unfreezing the indoor heat exchanger 12.

The first embodiment has described the processing of sequentially executing the heating operation and the air blowing operation to dry the indoor heat exchanger 12 (see Fig. 10), but the present invention is not limited to above. That is, after the indoor heat exchanger 12 has been unfrozen, the indoor heat exchanger 12 may be dried in such a manner that the indoor heat exchanger 12 functions as the condenser, the air blowing operation is executed, or the stop state of the equipment including the compressor 31 is continued.

A great amount of water due to unfreezing of the indoor heat exchanger 12 drops down onto the drain pan 13. Thus, an antibacterial agent may be kneaded into the drain pan 13 to obtain an antibacterial effect.

Alternatively, an ultraviolet irradiation section (not shown) may be provided at the indoor device 10, and the drain pan 13 may be irradiated with ultraviolet light for obtaining the antibacterial effect.

Alternatively, an ozone generation section (not shown) may be provided at the indoor device 10, and the antibacterial effect for the drain pan 13 etc. may be obtained by the ozone generation section.

Alternatively, the drain pan 13 may be coated with metal such as copper such that water easily flows through the drain pan 13 and the antibacterial effect for the drain pan 13 is obtained.

During the cooling operation or the dehumidification operation, water may be accumulated in the drain pan 13, and the accumulated water may be pumped up by a pump (not shown) to clean the indoor heat exchanger 12.

Each embodiment has described the configuration in which the single indoor device 10 (see Fig. 3) and the single outdoor device 30 (see Fig. 3) are provided, but the present invention is not limited to above. That is, multiple indoor devices connected in parallel may be provided, and multiple outdoor devices connected in parallel may be provided.

Each embodiment has been described in detail for the sake of simplicity in description of the present invention, and is not limited to one including all of the configurations described above.

The mechanisms and configurations considered necessary for description have been described above, and all mechanisms and configurations necessary for a product have not necessarily been described.

In a first preferred aspect of the present invention the air conditioner comprises a refrigerant circuit in which refrigerant circulates sequentially in a compressor, a condenser, an expansion valve, and an evaporator and a controller configured to control at least the compressor and the expansion valve. One of the condenser and the evaporator is is an outdoor heat exchanger, and the other one is an indoor heat exchanger. A temperature sensor configured to detect the temperature of the indoor heat exchanger is provided. An indoor fan is provided. The controller causes the indoor heat exchanger to function as the evaporator, and ends the processing of freezing the indoor heat exchanger when a first period set in advance is elapsed after the start of the processing. The controller maintains, after the end of the processing, stop states of the condenser and the indoor fan, and unfreezes the indoor heat exchanger.

In a second preferred aspect according to the first preferred aspect of the present invention, the first period is set based a relative humidity or an absolute humidity of an indoor air.

In a third preferred aspect according to the first and second preferred aspect of the present invention, the air-conditioner further comprises a drain pan arranged below the indoor heat exchanger.

### DESCRIPTION OF REFERENCE SIGNS

- 100, 100A: air-conditioner
- 10, 10A: indoor device
- 12, 12A: indoor heat exchanger (evaporator/condenser)
- 12a: first indoor heat exchanger
- 12b: second indoor heat exchanger
- 14: indoor fan
- 18: right-to-left wind deflector
- 19: upper-to-lower wind deflector
- 23: image capturing device (person detector)
- 30: outdoor device
- 31: compressor
- 31a: compressor motor (motor of compressor)
- 32: outdoor heat exchanger (condenser/evaporator)
- 33: outdoor fan
- 34: outdoor expansion valve (first expansion valve)
- 35: four-way valve
- 40: remote controller
- K: controller
- Q, QA: refrigerant circuit
- V: indoor expansion valve (second expansion valve)

## Claims

1. An air-conditioner (100) comprising:
a refrigerant circuit comprising a compressor (31), a condenser, an expansion valve and an evaporator in which a refrigerant circulates sequentially through the compressor (31), the condenser, the expansion valve, and the evaporator;
an indoor temperature sensor (24a) detecting an indoor temperature;
an indoor fan (14);
a controller (K) that controls at least the compressor (31) and the expansion valve, and the indoor temperature;
wherein one of the condenser and the evaporator is an outdoor heat exchanger (32), and other is an indoor heat exchanger (12), and
the controller (K):
makes the indoor heat exchanger (12) function as the evaporator to freeze water on the indoor heat exchanger (12),
during the freezing of water on the indoor heat exchanger (12), stops the indoor fan (14), or drives and stops, alternatively, the indoor fan (14),
wherein during cooling operation or heating operation of an air-condition, the controller (K) uses a detection value obtained from the indoor temperature sensor (24a) for control of devices,
and **characterised in that**
during freezing water on the indoor heat exchanger (12), the controller (K) does not use, for the control of the devices, the detection value obtained from the indoor temperature sensor (24a).

## Patentansprüche

1. Klimaanlage (100), die Folgendes umfasst:
einen Kühlkreislauf, der einen Kompressor (31), einen Kondensator, ein Expansionsventil und einen Verdampfer umfasst und in dem ein Kühlmittel der Reihe nach durch den Kompressor (31), den Kondensator, das Expansionsventil und den Verdampfer umläuft;
einen Innenraum-Temperatursensor (24a), der eine Innenraumtemperatur detektiert;
ein Innenraumgebläse (14);
eine Steuerung (K), die den Kompressor (31) und/oder das Expansionsventil und die Innenraumtemperatur steuert;
wobei der Kondensator oder der Verdampfer ein Außenraum-Wärmetauscher (32) ist und der jeweils andere ein Innenraum-Wärmetauscher (12) ist, und
wobei die Steuerung (K) die folgenden Schritte ausführt:
Verwenden des Innenraum-Wärmetauschers (12) als Verdampfer, um Wasser am Innenraum-Wärmetauscher (12) gefrieren zu lassen,
während des Gefrierens von Wasser am Innenraum-Wärmetauscher (12) Anhalten des Innenraumgebläses (14) oder abwechselndes Antreiben und Anhalten des Innenraumgebläses (14),
wobei die Steuerung (K) während des Kühlbetriebs oder des Heizbetriebs einer Klimatisierung einen Detektionswert, der vom Innenraum-Temperatursensor (24a) erhalten wird, zur Steuerung von Vorrichtungen verwendet,
und **dadurch gekennzeichnet, dass**
während des Gefrierens von Wasser am Innenraum-Wärmetauscher (12) die Steuerung (K) den Detektionswert, der vom Innenraum-Temperatursensor (24a) erhalten wird, nicht zur Steuerung der Vorrichtungen verwendet.

## Revendications

1. Appareil de conditionnement d'air (100) comprenant :
un circuit de réfrigérant comprenant un compresseur (31), un condenseur, une vanne d'expansion et un évaporateur, dans lequel un réfrigérant circule séquentiellement à travers le compresseur (31), le condenseur, la vanne d'expansion et l'évaporateur ;
un capteur de température interne (24a) détectant une température interne ; un ventilateur interne (14) ;
un contrôleur (K) qui commande au moins le compresseur (31) et la vanne d'expansion, et la température interne ;
dans lequel un élément parmi le condenseur et l'évaporateur est un échangeur de chaleur externe (32), et l'autre élément est un échangeur de chaleur interne (12), et
le contrôleur (K) :
fait fonctionner l'échangeur de chaleur interne (12) en tant qu'évaporateur pour geler de l'eau sur l'échangeur de chaleur interne (12),
pendant le gel de l'eau sur l'échangeur de chaleur interne (12), arrête le ventilateur interne (14), ou entraîne et arrête, en alternance, le ventilateur interne (14),
dans lequel, pendant l'opération de refroidissement ou l'opération de chauffe d'un conditionnement d'air, le contrôleur (K) utilise une valeur de détection obtenue à partir du capteur de température interne (24a) pour commander des dispositifs, et
**caractérisé en ce que**
pendant le gel de l'eau sur l'échangeur de chaleur interne (12), le contrôleur(K) n'utilise pas, pour la commande des dispositifs, la valeur de détection obtenue à partir du capteur de température interne (24a).
